# EUROPEAN PATENT APPLICATION

(11) **EP 0 991 272 A1**
(43) Date of publication of application: **05.04.2000**
(21) Application number: 99307765.0
(22) Date of filing: 01.10.1999
(51) Int. Cl.: H04N 5/445, H04N 5/44

(54) **EPG screen generating method and apparatus and EPG information transmission apparatus**

(30) Priority: 02.10.1998 JP 28066298
(71) Applicant: HITACHI, LTD., Chiyoda-ku, Tokyo (JP)
(72) Inventor: Nozoe, Takahiko, Yokohama-shi (JP); Akamatsu, Chiyo, Yokohama-shi (JP); Webster, Rodney G., Yokohama-shi (JP); Kudo, Yoshimichi, Fujisawa-shi (JP); Kuwabara, Tadashi, Yokohama-shi (JP); Okamoto, Hiroo, Yokohama-shi (JP); Ohara, Yasunori, Hitachnaka-shi (JP)
(74) Representative: Calderbank, Thomas Roger

(57) **Abstract**

An EPG generating apparatus (130) connected to a program receiver through a communication unit. A program guide (EPG) screen can be generated even in the presence of the program information of a plurality of different formats due to the difference in broadcast services. In a first method, an EPG generating apparatus acquires the program information in its direct form from a program receiver (110, 120). In this case, depending on whether the EPG generating apparatus has a program information interpreter (138, 139, 710, 720, 910, 920, 1111, 1121) of various formats or not or such a program information interpreter is acquired from the program receiver, the EPG screen is generated as the program information can be interpreted. In a second method, the program receiver converts the program information (200) into a common format capable of being interpreted by the EPG generating apparatuses, which in turn generate an EPG screen by interpreting the program information of common format. In a third method, the program receiver generates the component information of the EPG screen by interpreting the program information, and the EPG screen is generated by the EPG screen generating apparatus based on the component information.

## Description

The present invention relates to a method of generating an EPG (electric program guide) screen for the digital satellite broadcasting or the like, or more in particular to an apparatus connected to a broadcast receiver for receiving program information of a type dependent on the broadcast service for generating an EPG screen according to the program information. Also, the present invention relates to a technique for generating an EPG screen properly by the EPG screen generating apparatus even in an environment where a plurality of different program information exist.

In the digital satellite broadcast service, the information on the broadcast program is distributed by broadcast, and the user supplied with the EPG screen generated from this program information can intuitively perform the tuning operation. This technique of a system for distributing and receiving the program information is disclosed, for example, in JP-A-10-126750 entitled "Program Information Broadcast System, Broadcast Apparatus and Receiving Terminal Apparatus". Also, a technique for providing a more intuitively operated screen using the program information is disclosed in JP-A-10-93880 entitled "Three-Dimensional Display Program Guide Generating Apparatus".

On the other hand, a technique for displaying the information on external equipment connected by communication means together with the EPG information is disclosed in JP-A-10-150611 entitled "EPG Equipment and Control Method".

The digital satellite broadcast services are of various types. Many of them are based on ISO/IEC13818-1 to 13818-3 (generally called MPEG-2). Among them, the program information for the broadcast program is often expanded into a different format according to each digital satellite broadcast service based on the MPEG-2. In other words, the program information has a plurality of formats.

Under the circumstances, the receiving terminal device in the conventional "program information broadcast system, broadcast apparatus and receiving terminal device" and the "three-dimensional display program guide generating apparatus" described above are in many cases a broadcast receiver itself meeting the requirement of a specific digital satellite broadcast service. The format of the program information the requirement of which the equipment is to meet, therefore, can be specified at least at the time of designing the particular equipment. In other words, the equipment can be designed so as to interpret a specific program information. In the case of program recording equipment such as a digital VR connected by communication means to the broadcast receiver, however, it may be impossible to specify, at the time of designing the program recording equipment, a particular digital satellite broadcast service the requirement of which the broadcast receiver connected meets. The program information acquired from the broadcast receiver through communication means, therefore, may not be interpreted and the EPG screen cannot be generated. Even with such a program recording equipment, an improved operability is required by performing the recording reserve operation using the EPG screen, and therefore a technique is required to generate the EPG screen positively. The same can be said of a program display unit connected to the broadcast receiver. In the case where a plurality of broadcast receivers corresponding to different digital satellite broadcast services are connected, the operability of program selection is required to be improved by generating the EPG screen and displaying the program received from each broadcast receiver on the program display unit.

On the other hand, the conventional "EPG equipment and control method" described above refers to a method for displaying on the screen the information relating to external equipment connected to the EPG equipment by communication means. Nevertheless, no specific means is described for displaying (generating a screen for) the information of a plurality of different formats. In the presence of program information of different formats due to a plurality of digital satellite broadcast services as in the case mentioned above, therefore, a technique is required to generate an EPG screen.

The object of this invention is to solve these problems and to provide a method of generating an EPG screen properly by an EPG screen-generating equipment by acquiring the program information from the broadcast receiver through communication means even in the presence of different formats of program information due to a plurality of digital satellite broadcast services as described above.

According to the present invention, in order to solve the problem described above, a typical configuration described below is employed.

According to one aspect of the invention, there is provided an apparatus for generating an EPG screen by acquiring, from other equipment through communication means, the information required for generating the EPG screen for the user to select a program, wherein the information required for generating the EPG screen is the program information acquired and/or generated by other equipment from a broadcast signal or a recording medium, which program information has one or a plurality of different formats, said apparatus comprising:
means for identifying and specifying the format of the program information acquired from the other equipment;
means for interpreting the program information of one or a plurality of formats;
means for generating an EPG screen by interpreting the program information by the program information interpretation means in accordance with the format of the program information identified by the program information identification means; and
means for displaying the EPG screen generated by the EPG screen generating means on a display unit of the apparatus or an external display unit.

According to another aspect of the invention, there is provided an EPG screen generating apparatus for generating an EPG screen by acquiring, from other equipment through communication means, the information required for generating the EPG screen for the user to select a program, wherein the information required for generating the EPG screen is common program information generated from the program information of one or a plurality of formats acquired by the other equipment from the broadcasting or a storage medium, and interpreted by the EPG screen generating apparatus, the apparatus comprising:
means for interpreting the common program information;
means for generating an EPG screen by interpreting the common program information by the common program information interpretation means; and
means for displaying the EPG screen generated by the EPG screen generating means on a display unit of the apparatus or an external display unit.

According to still another aspect of the invention, there is provided an EPG screen generating apparatus for generating an EPG screen by acquiring, from other equipment through communication means, the information required for generating the EPG screen for the user to select a program, wherein the information required for generating the EPG screen is EPG screen component (or composition) information generated from the program information having one or a plurality of different formats acquired by the other equipment from a broadcast signal or a storage medium, including element information representing a figure or a text for at least one component element of the EPG screen, and/or the position information representing the position of the component element on the EPG screen, and/or the processing information representing the processing on the operation of the component element, the apparatus comprising:
means for interpreting the EPG screen component (or composition) information;
means for generating an EPG screen by interpreting the EPG screen component information by the EPG screen component information interpretation means; and
means for displaying the EPG screen generated by the EPG screen generating means on a display unit of the apparatus or an external display unit.
Other objects, features and advantages of the present invention will become apparent from reading the description of the following embodiments of the invention taken in conjunction with the accompanying drawings.

Fig. 1 is a block diagram showing a configuration of an IRD-A, IRD-B and VTR in a first method according to an embodiment of the invention.

Fig. 2 is a diagram showing a structure of the program information acquired by a broadcast receiver (IRD-A and IRD-B) from the broadcast.

Figs. 3A, 3B are flowcharts showing the EPG screen generation processing and the program selection processing in a first method according to an embodiment of the invention.

Fig. 4 is a diagram showing a screen example for the EPG screen generating device (VTR) to select the destination of the program.

Fig. 5 is a diagram showing the structure of the program information management data generated for generating the EPG screen from the program information acquired from the broadcasting.

Fig. 6 is a diagram showing an example of the EPG screen.

Fig. 7 is a block diagram showing a configuration of the IRD-A, IRD-B and the VTR employing the first method according to an embodiment of the invention.

Fig. 8 is a flowchart showing the EPG screen generation processing employing the first method according to an embodiment of the invention.

Fig. 9 is a block diagram showing a configuration of the IRD-A, IRD-B and VTR in a second method according to an embodiment of the invention.

Fig. 10 is a flowchart showing the EPG screen generation processing in a second method according to an embodiment of the invention.

Fig. 11 is a block diagram showing a configuration of the IRD-A, IRD-B and VTR using the EPG screen component information in a third method according to an embodiment of the invention.

Fig. 12 is a diagram showing the structure of an EPG screen component information for storing the component information of the EPG screen generated by the broadcast receiver (IRD-A and IRD-B) and transmitted to the EPG screen generating equipment (VTR).

Figs. 13A, 13B are flowcharts showing the EPG screen generation processing and the program selection processing using the EPG screen component information in the third method according to an embodiment of the invention.

Fig. 14 is a diagram showing an example of the EPG screen in the third method.

Fig. 15 is a block diagram showing a configuration of the IRD-A, IRD-B and VTR using the EPG screen data in the third method according to an embodiment of the invention.

Figs. 16A, 16B are flowcharts showing the EPG screen display processing and the program selection processing using the EPG screen data in the third method according to an embodiment of the invention.

An embodiment of the invention will be described below with reference to the accompanying drawings. In the embodiment, an explanation will be given of a method in which in the presence of a plurality of different formats of program information, the equipment for generating an EPG screen acquires the program information of the same format or an appropriately changed format through communication means from a broadcast receiver and generates an EPG screen properly. The "program information" is defined as the information provided by the broadcasting together with the video/audio signal and includes the explanation of the contents of programs, the schedule for broadcasting programs, the transmission specifications such as the channel and frequency information, the information for identifying corresponding video/audio signals, and further the information on the charge to be paid on the viewing or recording the program.

The method according to this embodiment is roughly divided three categories, which will be sequentially described below. First, an explanation will be given of a method in which the EPG screen generating equipment acquires the program information in its direct form from a broadcast receiver and after identifying and interpreting various formats thereof, generates an EPG screen according to the particular formats. Secondly, an explanation will be made of a method in which the broadcast receiver converts the program information into a common format that can be interpreted by the EPG screen generating equipment and using the program information of the common format, generates an EPG screen. As the third category, an explanation will be made of a method in which the broadcast receiver generates the EPG screen component information including the text, the figure information making up the EPG screen and the related processing information, and the EPG screen generating apparatus generates an EPG screen using the EPG screen component information.

In the description that follows, the broadcast in the embodiment is assumed to be a digital satellite broadcast. The signal of the digital satellite broadcast contains the video/audio signal coded and time-division multiplexed based on the well-known MPEG-2, and the aforementioned program information of the embodiment. The details of MPEG-2 are standardized in ISO IEC13818-1 to 13818-3. As for the program information, however, only the basic information format is standardized in MPEG-2.

The well-known IEEE1394 serial bus may be used as communication means. A network system with AV equipment using the IEEE1394 serial bus can use a synchronous transmission method for the transmission of video and audio signals making up the program and an asynchronous transmission method for the transmission of a control signal. The details of IEEE1394 are standardized in IEEE Std 1394-1995 as "IEEE Standard for a High Performance Serial Bus", the disclosure of which is hereby incorporated by reference.

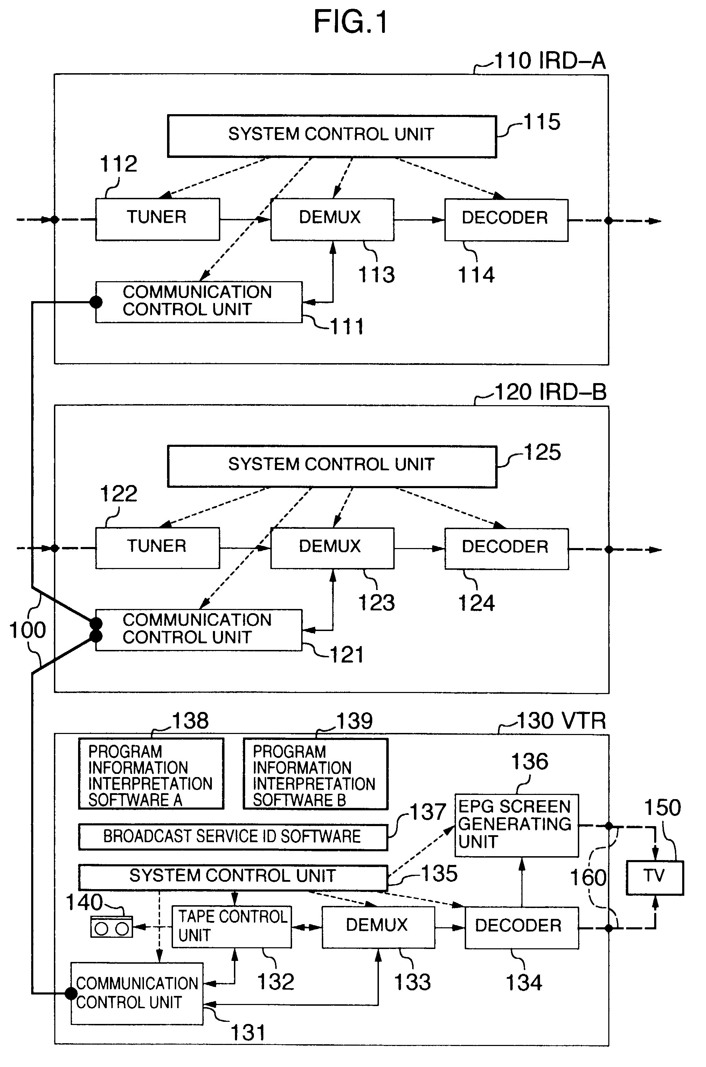

In Figs. 1 to 14, reference numeral 100 designates an IEEE1394 serial bus, numerals 110, 120 digital satellite broadcast receivers (IRD), numeral 130 a VTR, numeral 150 a TV, numerals 111, 121, 131 a communication control unit, numerals 136, 1132 an EPG screen generating unit, numerals 137, 730 a broadcast service identification software, numerals 138, 139, 710, 720, 910, 920, 1111, 1121 a program information interpretation software, numeral 200 program information, numeral 400 an input select screen, numeral 500 a program information management data, numerals 600, 1400 an EPG screen, numerals 1112, 1122 an EPG screen component (or composition) information generating software, numeral 1131 an EPG screen component (or composition) information interpretation software, numeral 1200 an EPG screen component (or composition) information, numerals 1512, 1522 an EPG screen data generation software, and numeral 1531 an EPG screen control software.

### Description of first method

First, an explanation will be given of the first method in which the EPG screen generating device acquires the program information in its direct form from the broadcast receiver, and after identifying and interpreting the format thereof, generates an EPG screen according to the particular format. The explanation here refers to a network system of the AV equipment shown in Fig. 1.

First, this network system is connected with the IRD-A110, IRD-B120 and VTR 130 in tree or daisy chain by the IEEE1394 serial bus 100, so that the communication is possible of the video and audio signals constituting each program and the control signal for controlling each equipment. In the shown case, the IRD-A110 and IRD-B120 are assumed to be broadcast receivers and the VTR 130 is assumed to be the equipment for generating the EPG screen.

An example configuration of each equipment to which the method of the embodiment is applicable will be explained with reference to Fig. 1.

First, the IRD-A110 constituting a broadcast receiver includes a communication control unit 11 in charge of the communication described above, a tuner 112 for receiving the digital signal from the broadcast wave, a demultiplexer DEMUX 113 for extracting the proper digital signal from the digital signal time-division multiplexed and received by the tuner 112, a decoder 114 for converting the digital signal extracted by the DEMUX 113 into an analog signal, and a system control unit 115 for controlling the whole IRD-A110.

The IRD-B120 constituting the broadcast receiver, on the other hand, has a similar configuration as the IRD-A110, and includes a communication control unit 121, a tuner 122, a DEMUX 123, a decoder 124 and a system control unit 125. The difference between IRD-A110 and IRD-B120 lies in the corresponding broadcast services. It is assumed here that the IRD-A110 corresponds to the broadcast service A and the IRD-B120 corresponds to the broadcast service B.

The VTR 130 making up the EPG screen generating equipment includes a communication control unit 131 in charge of the communication described above, a tape control unit 132 for controlling a mechanism such as a magnetic head and a reel not shown used for recording and reproduction on the magnetic tape, a DEMUX 133 for extracting the proper digital signal from the time-division multiplexed digital signal acquired through the communication means or reproduced from the magnetic tape, a decoder 134 for converting the digital signal extracted by the DEMUX 133 into an analog signal, a system control unit 135 for controlling the whole VTR 130, an EPG screen generating unit 136 for generating an EPG screen displayed on a TV 150 as a primary component of the invention, a broadcast service identification software 137 for identifying the difference of the broadcast service and determining the format of the program information, a program information interpretation software A138 for interpreting the program information of the broadcast service A and a program information interpretation software B139 for interpreting the program information of the broadcast service B as software for interpreting the program information, and a magnetic tape 140. The TV 150 for displaying the EPG screen is connected to the EPG screen generating unit 136 and the decoder 134 by a signal line 160.

The foregoing is the description of an example configuration of the IRD-A110, IRD-B120 and the VTR 120 used in the first method.

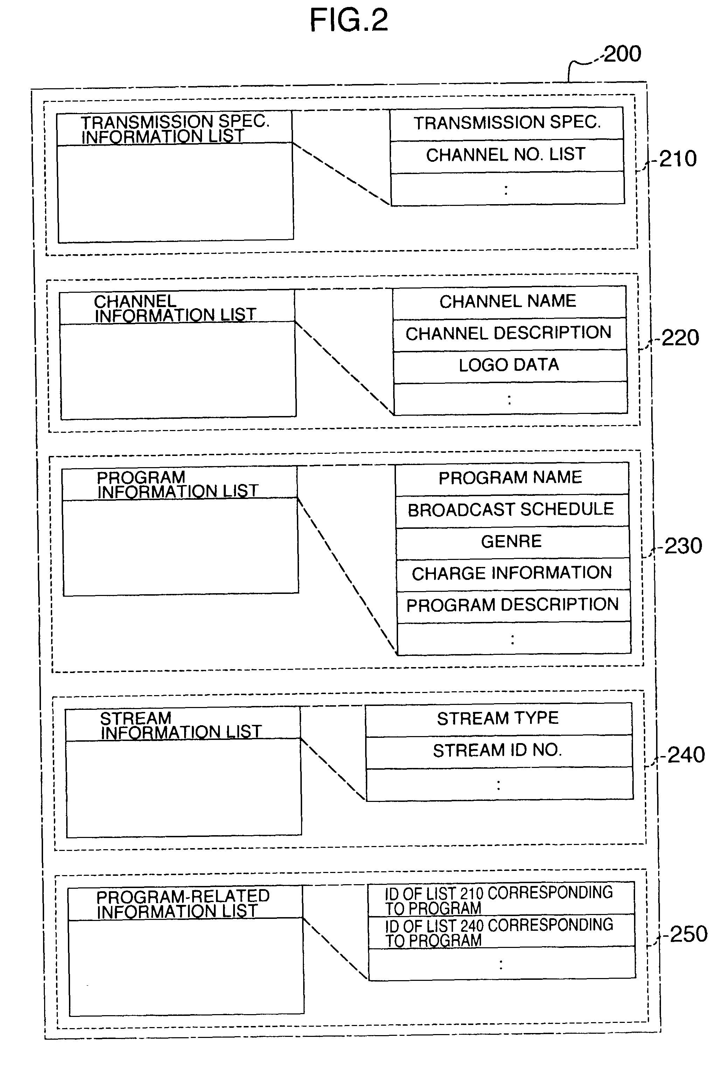

Now, with reference to Fig. 2, an explanation will be given of the data format of the program information 200 used in the first method and acquired by the EPG screen generating equipment 130 from the broadcast receiver. The data format of the program information 200 shown in Fig. 2 is the same as the one obtained from the broadcast signal by the broadcast receiver. By way of simplification, the description that follows will partially refer to a generic format.

In Fig. 2, the program information 200 mainly includes a transmission specification list 210, a channel information list 220, a program information list 230, a stream information list 240 and a program related information list 250.

The transmission specification list 210 has stored therein the transmission specification information including the frequency information for receiving the desired program from the broadcast radio wave and the channel number corresponding to each transmission specification. The channel information list 220 has stored therein the channel name, the channel description, the illustrative information such as the channel logo for indicating the logo of each channel. The program information list 230 has stored therein, for each channel, the program name, the broadcast schedule information indicating the program start and end time, the genre information for identifying the genre of the program, the charge information indicating the fee to be charged in the case where the program is a fee-charging one, and the program description. The stream information list 240 has stored therein, for each stream, the type of stream (identifying the digital television service or digital radio audio service) and the stream ID number for identifying the actual data with the particular stream stored therein. The program related information list 250 has stored therein the identification ID of the transmission specification information 210 and the stream information list 240. The program select operation of the user on the EPG screen is reflected in the actual program select control using the program related information list 240.

The program information 200 is provided in many cases in different formats depending on the broadcast services. In the description that follows, the IRD-A110 corresponding to the broadcast service A is assumed to acquire the program information A and the IRD-B120 corresponding to the broadcast service B to acquire the program information B from the broadcast means. In addition, the data format of each program information is assumed to be different.

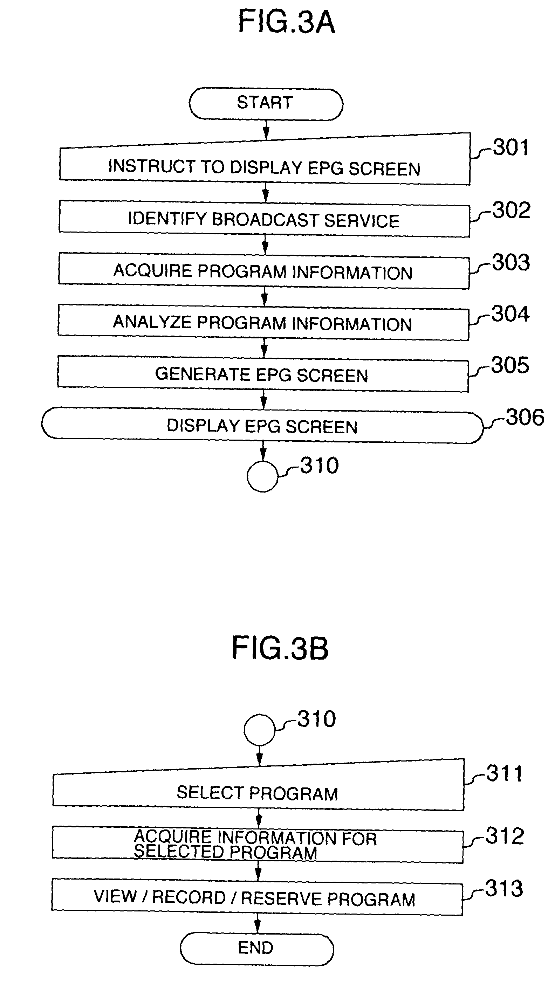

Now, the process of generating the EPG screen according to the first method will be explained with reference to Fig. 3A showing the process flow thereof.

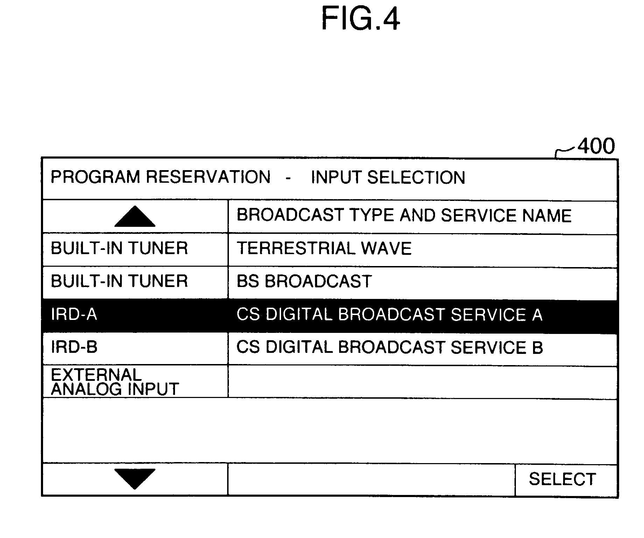

First, the user gives an instruction to the VTR 130 to display the EPG screen and thus starts the process (step 301). In the case of the VTR recording reservation, for example, in which the program is recorded in an external broadcast receiver connected by the IEEE1394 serial bus, this instruction is given on the input select (for selection of the broadcast receiver providing an input source) screen 400 shown in Fig. 4.

Input elements available for selection (such information as the type of the broadcast corresponding to the input, the name and type of the service including the process of the next step 302) are displayed on the input select screen 400. The user can select the input source from the input select screen, and thus can instruct the EPG screen to be displayed. Assume here that an instruction is given by way of the input select screen 400 to display the EPG screen for the program received by the IRD-A110, i.e. the program of the broadcast service A.

Then, the broadcast service to which the EPG screen instructed for display in step 301 corresponds is identified by the broadcast service identification software 137 (step 302). This process is performed by the IRD-A110 acquiring the ID information of the corresponding broadcast service by communication of the control signal using the IEEE1394 serial bus 100 from the input element (IRD-A110, in this case) selected on the input select screen 400. This processing may be identified in advance when generating the input select screen 400. In this case, this step is used to identify the corresponding broadcast service from the result of the user input selection.

Then, the program information 200 for generating the EPG screen is acquired from the IRD-A110 (step 303). The request to the IRD-A110 for acquiring the program information 200 is issued by communication of a control signal using the IEEE1394 serial bus 100. The program information 200 itself, however, may be transmitted by the communication according to the synchronous transmission scheme like the normal program. This is by reason of the fact that the program information 200 is provided by the broadcasting multiplexed on other video/audio signal, and that the program information 200, the contents of which changes every moment, requires synchronism in many cases.

The program information 200, as described above, has different data formats with different broadcast services, and therefore the processing for acquisition thereof may be varied from one data format to another. The processing of step 303 is executed by the program information interpretation software A 138 (the software for interpreting the program information of the broadcast service A). Specifically, the processing of this step is executed by the software corresponding to the broadcast service A received by IRD-A110. The program information 200 acquired from IRD-A110 may be multiplexed on the video/audio signal. In this step, therefore, the program information is extracted from the multiplexed signal using the DEMUX 133.

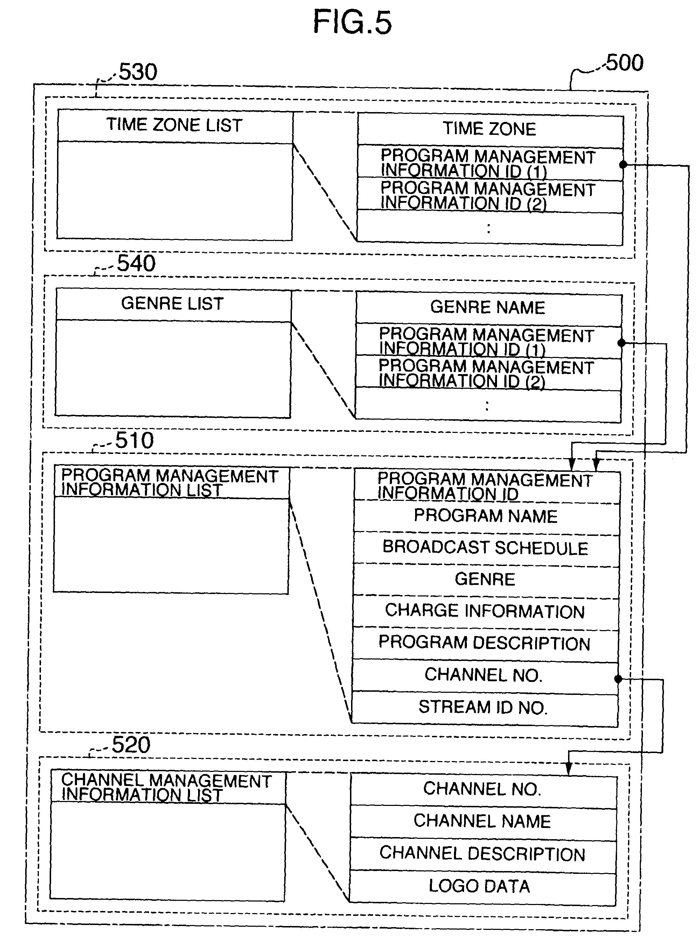

Then, the program information 200 acquired in step 303 is analyzed to generate the EPG screen (step 304). In this step, as in the preceding step 303, the program information interpretation software A 138 corresponding to the broadcast service A is used. In this step, each information list of the program information 200 shown in Fig. 2 is analyzed in accordance with the specification of the data format for the corresponding broadcast service. Specifically, the broadcast schedule of the program and the ID number of the stream constituting the program are analyzed and replaced with the corresponding management data. The management data are configured, as shown in Fig. 5, for example, to be displayed for each of the broadcast schedule (time), the genre of the program and the program channel number. Further, the arrangement is made in which the broadcast receiver can be requested to acquire the video/audio signal for the program selected on the EPG screen on display.

Now, an explanation will be given of an example of the program information management data 500 for managing the program information with reference to Fig. 5.

In Fig. 5, the program information management data 500 mainly includes a program management information list 510, a channel management information list 520, a time zone list 530 and a genre list 540.

The program management information list 510 has stored therein, for each program, the program management information ID for identifying the program management information in the list, the program name, the broadcast schedule, the genre information, the charge information and the program description, which are acquired from the program information list 230. Further, the channel number and the stream ID number corresponding to the stream such as the video/audio signal making up the program are stored. The channel management information list 520 has stored therein the channel number, the channel name, the descriptive statement, the illustrative information of the logo, which are acquired from the channel information list 220 and arranged in the order of channel number. The time zone list 530 has stored therein each specific time zone and the program management information ID corresponding to the program broadcast in the particular time zone. The specific time zone referred herein is two hours (19:00 to 21:00), for example, during which display on one EPG screen is possible. The genre list 540 has stored therein each genre name and the program management information ID corresponding to the programs contained in the particular genre.

For acquiring the video/audio signal for the program selected on the EPG screen on display from the broadcast receiver, the broadcast receiver is requested by the stream ID number described above to acquire the video/audio signal.

In this step, the EPG screen is generated by the EPG screen generating unit 136 based on the program information managed as the program information management data 500 in step 304 (step 305).

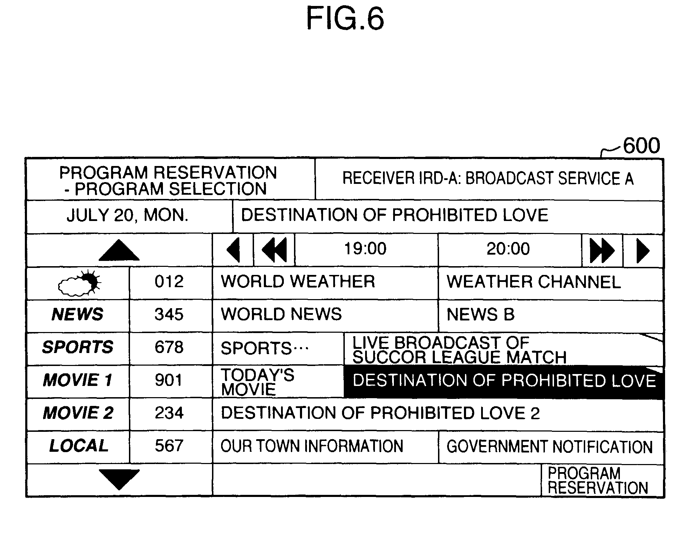

An example of the EPG screen is designated by 600 in Fig. 6, and displayed according to the program broadcast schedule. First in this step, in accordance with the time when the display of the EPG screen 600 is requested, the time zone list 530 is referenced followed by referring to the corresponding program management information list 510. With reference to the required information from the program management information list 510, the EPG screen 600 is generated. In the process, the channel management information 520 is further referred to by the channel number corresponding to each program, so that the channel number, the channel name and the logo data are also displayed. Further, the EPG screen 600 is generated in such a manner that the user can select each program, and also the displayed program can be changed by the time zone or the channel number. In the case where the user requests the EPG screen 600 by genre to be displayed, on the other hand, the EPG screen is generated not from the time zone list 530 but from the genre list 540.

After the end of the processing for generating the EPG screen 600 in step 305, the EPG screen 600 is displayed on the TV 150 in the same step (step 306). For example, the video data output for display on the TV 150 is multiplexed on the EPG screen 600 generated in step 304 and output.

By doing so, the EPG screen generating equipment (VTR 130) can acquire the program information (program information 200) in its direct form from the broadcast receiver (IRD-A110) and, after identification and interpretation of the format thereof, can generate the EPG screen (EPG screen 600) in accordance with the same format.

A method of acquiring the video/audio signal for the program selected on the EPG screen displayed in this way from the broadcast receiver will be explained with reference to Fig. 3B.

First, the user selects the desired program from the EPG screen displayed in step 306 shown in Fig. 3A (step 311).

Then, the information for the program selected in step 311 is acquired (step 312). This processing is executed by the EPG screen generating unit 136, and the information for the program is defined as the stream ID information (in the program management information list 510) corresponding to the program selected by the user.

Using the stream ID information acquired in step 312, the IRD-A110 is requested to acquire the video/audio signal for the particular program, and in accordance with the application involved, the signal is reproduced/recorded or subjected to the reservation processing (step 313).

By doing so, not only the EPG screen is generated and displayed, but the desired program can be selected from the EPG screen and viewed, recorded and/or reserved as well.

The process of generating the EPG screen according to the first method was described above.

In the aforementioned method, the EPG screen generating equipment can display only an EPG screen for the broadcast service which satisfies preconditions, i.e. for the broadcast services presupposed by the equipment. Now, an explanation will be given of a configuration and a method using the first method, in which the EPG screen generating equipment is not required to satisfy the preconditions for the various broadcast services. This method is an application of the first method after all, and therefore the program information acquired from the broadcast receiver has the same format as acquired from the broadcast signal.

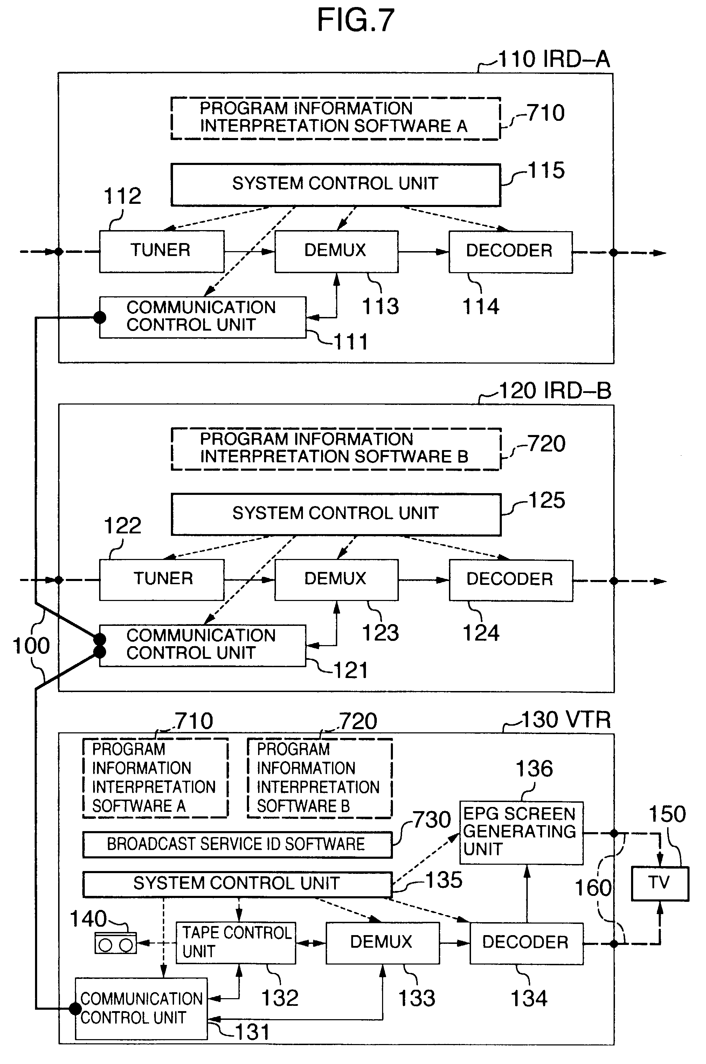

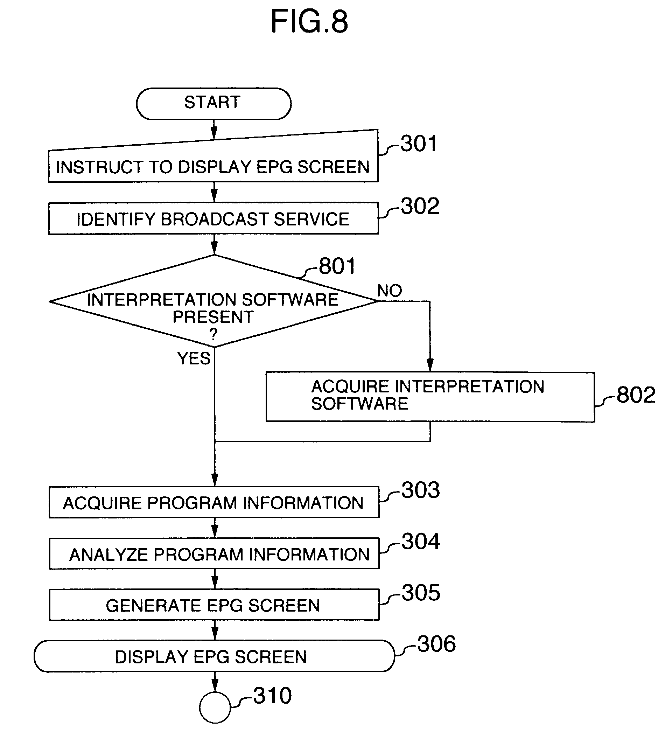

First, the process of generating an EPG screen will be explained with reference to Fig. 7 showing an example configuration of each equipment and Fig. 8 showing a processing flow.

Reference is made first to the equipment configuration. This is substantially the same as the one shown in Fig. 1. The difference, however, lies in that the VTR 130 holds no program information interpretation software (the program information interpretation software A138 and B139 in Fig. 1) for each broadcast service, but the IRD-A110 and IRD-B120 hold the program information interpretation software (the program information interpretation software A710 and B720 in Fig. 7) for the corresponding broadcast services.

The processing steps are also substantially the same as those shown in Fig. 3A. The difference lies, however, in that a step is added between step 302 and step 303 in Fig. 3A. The step thus added will be explained below. In step 301, as explained with reference to Fig. 3A, it is assumed that an instruction is given to display the program received by IRD-A110, i.e. the program of the broadcast service A by way of the input select screen 400 of the EPG screen.

The VTR 130 that has identified the broadcast service in step 302 determines whether it has the program information interpretation software A710 for interpreting the program information 200 acquired in step 303 (step 801). In the case where the VTR 130 has the program information interpretation software A710, the process directly proceeds to step 303, otherwise, the process proceeds to step 802.

In the case where it is determined in step 801 that the VTR 130 has no program information interpretation software A710 corresponding to the broadcast service A, the program information interpretation software A710 is acquired from the IRD-A110 (step 802). The process then proceeds to step 303. The rest is to execute the process in accordance with the procedure shown in Fig. 3A. In this case, too, the acquisition processing is executed by the communication of a control signal using the IEEE1394 serial bus 100.

With the procedure, even if the EPG screen generating equipment (VTR 130) fails to satisfy the preconditions for various broadcast services(i.e. has no program information interpretation software corresponding to the various broadcast services), the EPG screen thereof can be displayed. Also, the program information acquired from the broadcast receiver remains in the same form as that acquired from the broadcast signal. The process of steps 801 and 802 of Fig. 8 are executed by the broadcast service identification software 730 shown in Fig. 7.

Further, even in the case where the VTR 130 already has the program information interpretation software corresponding to the broadcast service when the processing is executed for acquiring the program information processing software in step 802, the particular program information interpretation software can be changed to a new one or the one of higher function. This can be attained by using the broadcast service ID software 730 capable of determination in step 801 on the version information of the program information interpretation software. Further, in the processing for acquiring the program information processing software in step 802, an explanation was given that the program information processing software 710 is acquired from the IRD-A110. Alternatively, however the program information processing software A710 may be acquired from another equipment (another broadcast receiver or a personal computer meeting the requirement of the broadcast service A, for example) through the IEEE1394 serial bus 100 instead of from the IRD-A110.

### Description of second method

Now, an explanation will be given of a second method of generating an EPG screen, on the broadcast receiver side, using the program information of common format obtained by conversion and capable of being interpreted by the EPG screen generating equipment.

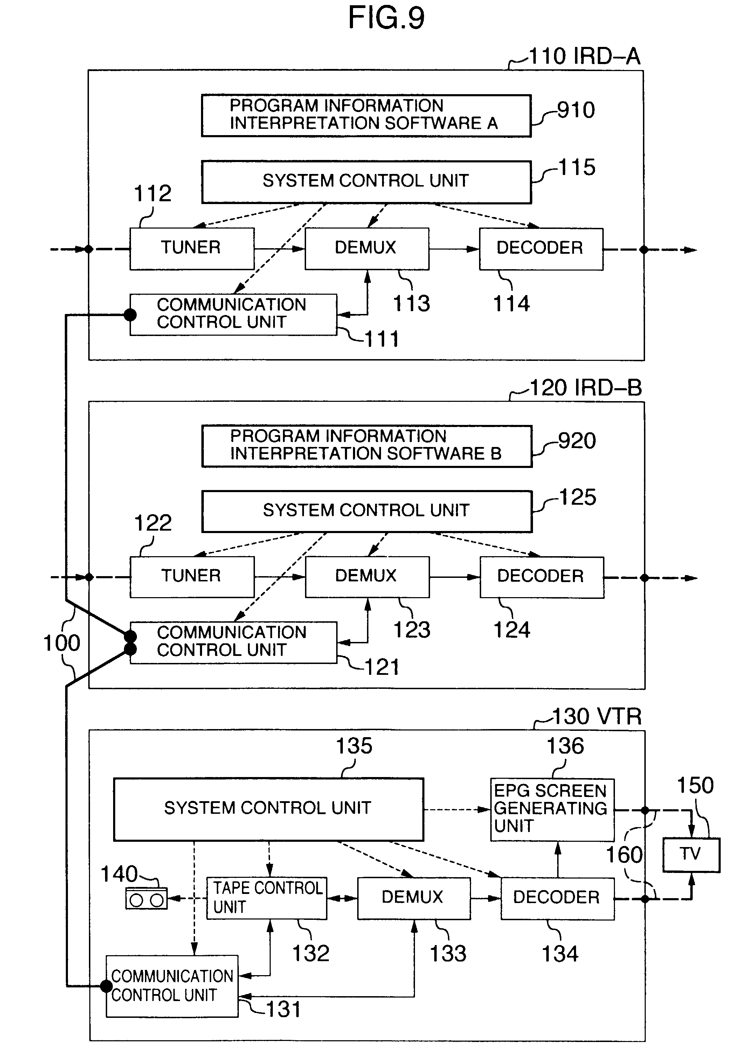

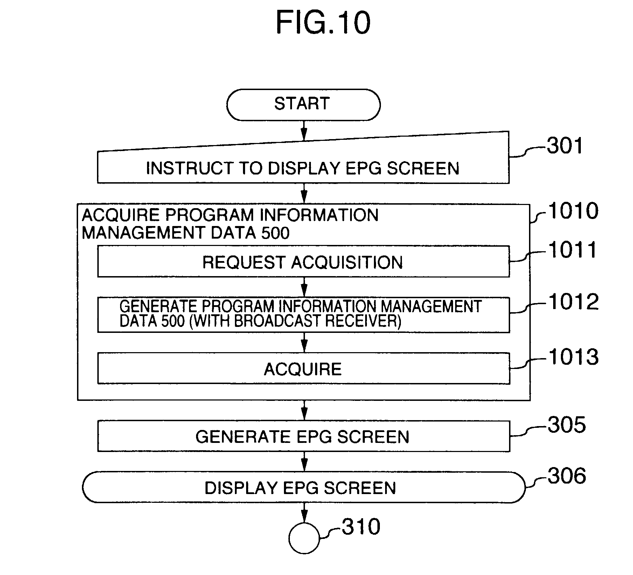

In this method, the program information of common format is the program information management data 500, which is generated by the broadcast receiver based on the program information 200. The EPG screen generating equipment generates the EPG screen by acquiring the program information management data 500 from the broadcast receiver. The process of generating the EPG screen according to this method will be explained with reference to Fig. 9 showing an example configuration of each equipment and Fig. 10 showing the processing flow. The network configuration is assumed to be the same as the one explained in the first method. Similarly, as in the first method, it is assumed that the IRD-A110 providing a broadcast receiver corresponds to the broadcast service A, the IRD-B120 corresponds to the broadcast service B, and the VTR 130 constitutes the EPG screen generating equipment.

First, reference is made to the configuration of each equipment, which is substantially the same as the one shown in Fig. 1. The difference is that the VTR 130 has not any program information interpretation software (the program information interpretation software A138 and B139 in Fig. 1) corresponding to each broadcast service nor the broadcast service ID software 137. Nevertheless, the IRD-A110 and IRD-B120 have the program information interpretation software (the program information interpretation software A910 for IRD-A110 and the program information interpretation software B920 for IRD-B120) corresponding to the broadcast service associated with each equipment.

The processing steps are also similar to those shown in Fig. 3A. These processing steps will be explained below. In the description that follows, as in the explanation of Fig. 3A (step 301), it is assumed that an instruction is given by way of the input select screen 400 to display the EPG screen for the program received by the IRD-A110, i.e. the program of the broadcast service A.

First, like step 301 shown in Fig. 3A, the process is started when the user gives an instruction to the VTR 130 to display the EPG screen (step 301).

Then, the program information management data 500 for generating the EPG screen is acquired from the IRD-A110 (step 1010). Step 1010 is processed in three stages described below.

First, the VTR 130 requests the IRD-A110 to acquire the program information management data 500 (step 1011). This request is issued by communication of the control signal using the IEEE1394 serial bus 100 as in step 303 of Fig. 3A.

Then, the IRD-A110 requested to acquire the program information management data 500 from the VTR 130 generates the program information management data 500 based on the program information 200 supplied by broadcast or the like (step 1012). This step is processed by the program information interpretation software A910 in the IRD-A110.

The IRD-A110 transmits the program information management data 500 generated in step 1012 to the VTR (step 1013). The communication method employed in this case uses a control signal through the IEEE1394 serial bus 100, i.e. by responding to the acquisition request from the VTR 130 in step 1011. Nevertheless, the response may be transmitted by being multiplexed on other video/audio signals by the communication of synchronous transmission scheme as in the normal synchronous transmission scheme.

In subsequent processes, like in Fig. 3A, the EPG screen 600 is generated by the EPG screen generating unit 136 based on the program information management data 500 (step 305), and the EPG screen 600 thus generated is displayed on the TV 150 (step 306). By the way, in the case where the desired program is selected from the EPG screen to execute the function of viewing, recording or reservation, the process shown in Fig. 3B is employed.

The process for generating the EPG screen according to the second method was explained above.

With the second method, even in the case where the EPG screen generating unit (VTR 130) is not prepared for various broadcast services (i.e. even in the case where it has no program information interpretation software meeting the requirement of various broadcast services), the EPG screen can be displayed. Also, in this method, the program information acquired from the broadcast receiver is converted into a common format capable of being interpreted by the EPG screen generating equipment on the broadcast receiver side.

### Description of third method

Finally, a method for generating the EPG screen will be explained, in which the broadcast receiver generates the EPG screen component (or composition) information including the text and figure information making up the EPG screen and the related processing information, and the EPG screen generating apparatus generates the EPG screen using the EPG screen component information.

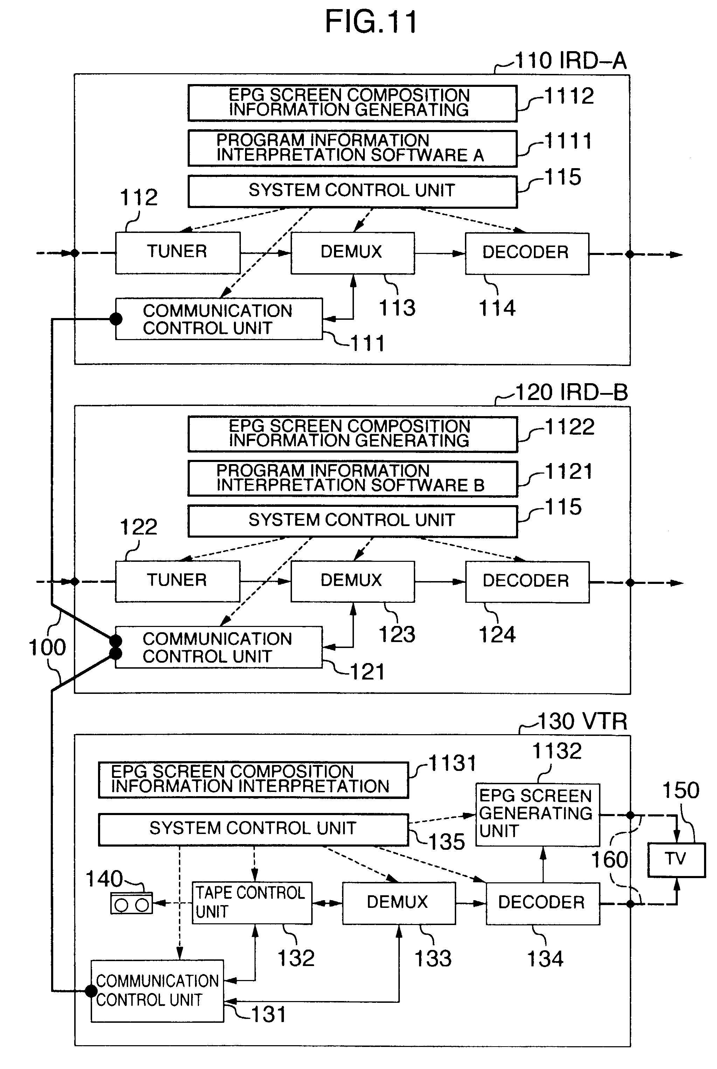

First, an example configuration of each equipment in this method will be explained. Reference is had to Fig 11. The network configuration is assumed to remain the same as before. In similar fashion, the IRD-A110 providing the broadcast receiver corresponds to the broadcast service A, the IRD-B120 corresponds to the broadcast service B, and the VTR 130 constitutes the EPG screen generating apparatus.

First, the IRD-A110, in addition to the component elements shown in Fig. 1, has the program information interpretation software Allll corresponding to the broadcast service (broadcast service A) for the equipment and the EPG screen component information generation software 1112 for generating the EPG screen component information.

Like the IRD-A110, the IRD-B120, in addition to the component elements shown in Fig. 1, has the program information interpretation software B1121 (corresponding to the broadcast service B) and the EPG screen component information generation software 1122.

The VTR 130, on the other hand, in addition to the component elements shown in Fig. 1, has the EPG screen component information interpretation software 1131, but not the broadcast service ID software 137 or the program information interpretation software A138, 139 of Fig. 1.

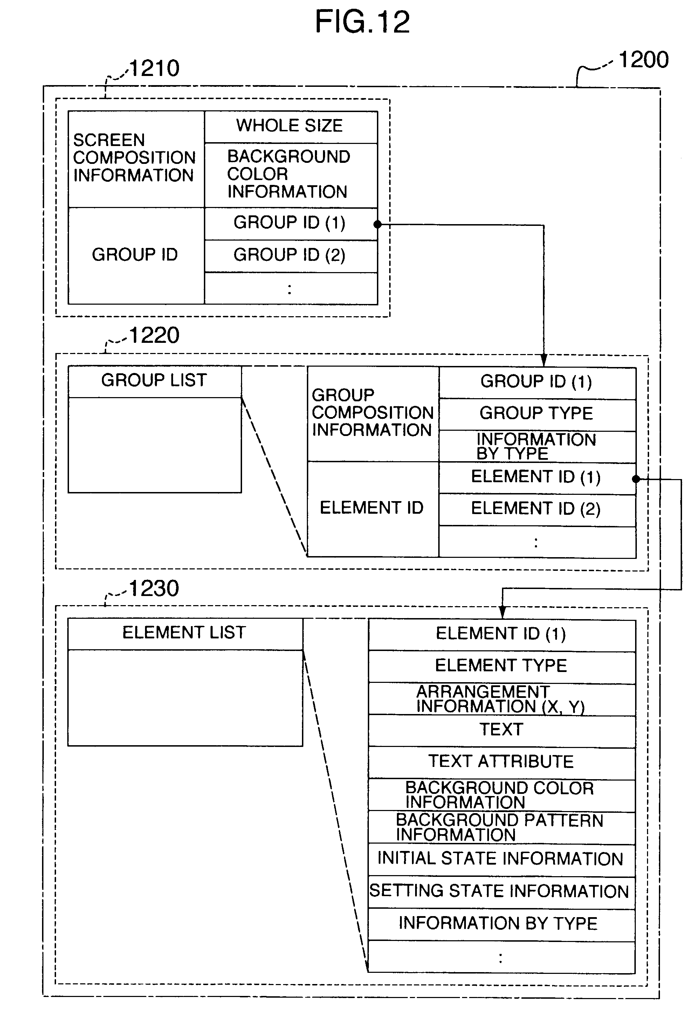

Now, an example data format of the EPG screen component information 1200 acquired from the broadcast receiver by the EPG screen generating equipment will be explained with reference to Fig. 12.

The EPG screen component information 1200 holds the information such as the texts and figures making up the EPG screen for each element. The elements can be managed as a group (a plurality of elements are grouped as a screen element group) according to the manner in which they are handled. As a result, the display update processing for only a part in the screen can be handled, and one of a plurality of choices (elements to be selected) can be selectable. The elements herein referred to are defined as the images indicating the logo of a channel or a button constituting a choice.

First, in Fig. 12, the EPG screen component information 1200 mainly includes a whole screen information 1210, a group list 1220 and a screen element list 1230.

The whole screen information 1210 has stored therein the screen component information including the whole size of the EPG screen, the background color information indicating the background color applied to the whole EPG screen and the screen element group information including a group ID list of the groups making up the particular EPG screen. The group list 1220 has stored therein the group component information including the group ID for identifying a particular group, the group type for identifying the type of the particular group, and the information by type for holding the information unique to each group type, and further the element information including an element ID list indicating the elements constituting the group. The group type includes, for example, the title portion of the EPG screen, and the information by type includes the information as to whether a plurality of choices can be selected or only once choice can be selected at a time. The element list 1230 has stored therein, for each element, the element ID for identifying the elements, the element type for identifying the type of each element, the arrangement information indicating the relative positions of the elements on the EPG screen, the text indicating the display characters of the elements, the text attribute indicating the display attribute (size, etc.) of the text, the background color information indicating the background color applied to the elements, the background pattern information indicating the display pattern of the elements, the initial state information applied when the elements have a plurality of display states (display patterns), the setting information referred to as a value settable when a particular element is selected, and the information by type holding the information unique to the element type. The element type includes a button element for accepting a selection and a simple text element. The information by type, on the other hand, holds information as to whether a particular element, if a button element, is selectable at the particular time point or not and the processing (outputting a voice, etc. in which case the voice information is also required) in the case where the button is selected. Also, the background color information and the background pattern information can hold information, if a button element is involved, corresponding to one of a plurality of states of unselected, selected and unselectable (not focused).

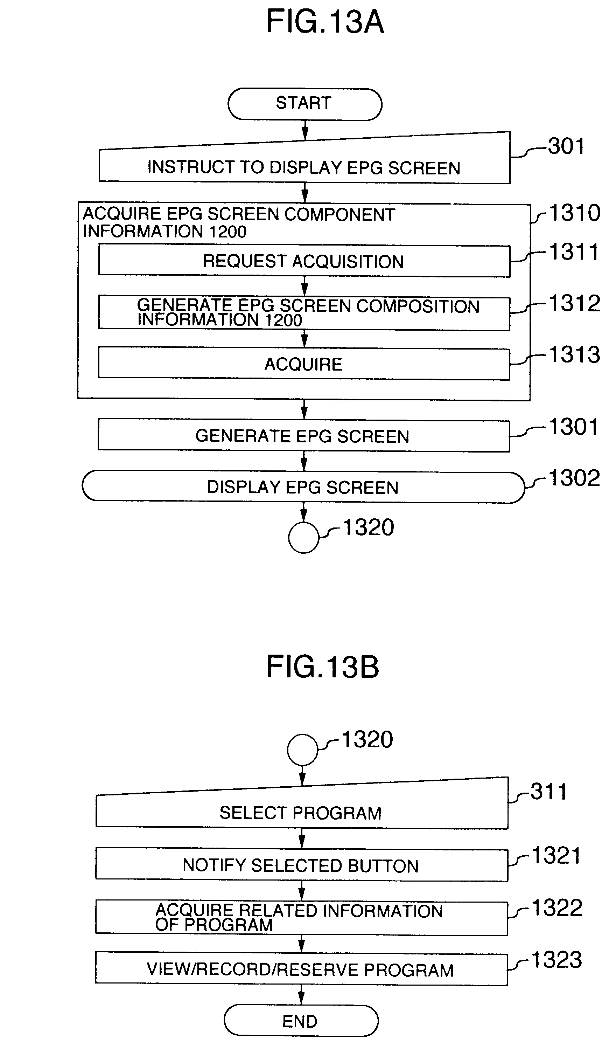

Now, an explanation will be given of the process for generating the EPG screen according to the third method with reference to Figs. 13A, 13B showing the processing flow. As in Fig. 3A (step 301), assume that an instruction has been given by way of the input select screen 400 to display the EPG screen for the program received by the IRD-A110, i.e. to display the EPG screen for the program of the broadcast service A.

First, as in step 301 shown in Fig. 3A, the process is started by the user giving an instruction to the VTR 130 to display the EPG screen (step 301).

Then, the EPG screen component information 1200 for generating the EPG screen is acquired from the IRD-A110 (step 1310). Step 1310 is processed in three stages described below.

First, the VTR 130 requests the IRD-A110 to acquire the EPG screen component information 1200 (step 1311). The request processing is executed by communication of a control signal using the IEEE1394 serial bus 100, as in step 303 shown in Fig. 3A. In the process, the IRD-A110 transmits information required for generating the EPG screen component information 1200. The transmitted information includes, for example, the time information (YY hours from time XX) on the EPG screen the generation of which is requested and the genre information. Also, the information (displayable size and displayable color) for the display function of the screen generated by the EPG screen generating unit 1132 in the VTR 130 are also transmitted at the same time.

The IRD-A110 that has been requested to acquire the EPG screen component information 1200 from the VTR 130 generates the EPG screen component information 1200 based on the program information 200 provided by the broadcast, etc. (step 1312). In the process, the EPG screen component information 1200 is generated with reference to and in accordance with the information transmitted from the VTR 130 in step 1312. By the way, this step is processed by the program information interpretation software A1111 and the EPG screen component information generating software 1112 in the IRD-A110.

The IRD-A110 transmits the EPG screen component information 1200 generated in step 1312 to the VTR (step 1313). The communication method involved is to communicate a control signal using the IEEE1394 serial bus 100, i.e. to respond to the acquisition request from the VTR 139 in step 1311.

In this step, the EPG screen component information acquired in step 1310 is interpreted by the EPG screen component information interpretation software 1131, and based on this interpretation, the EPG screen is generated by the EPG screen generating unit 1132 (step 1301). This process is executed by reference to the whole screen information 1210, the group list 1220 and the screen element list 1230 in the EPG screen component information 1200 and based on the arrangement information and the initial state information. At the same time, as required, the EPG screen area unique to the VTR 130 may be overlapped with the EPG screen area generated from the EPG screen component information

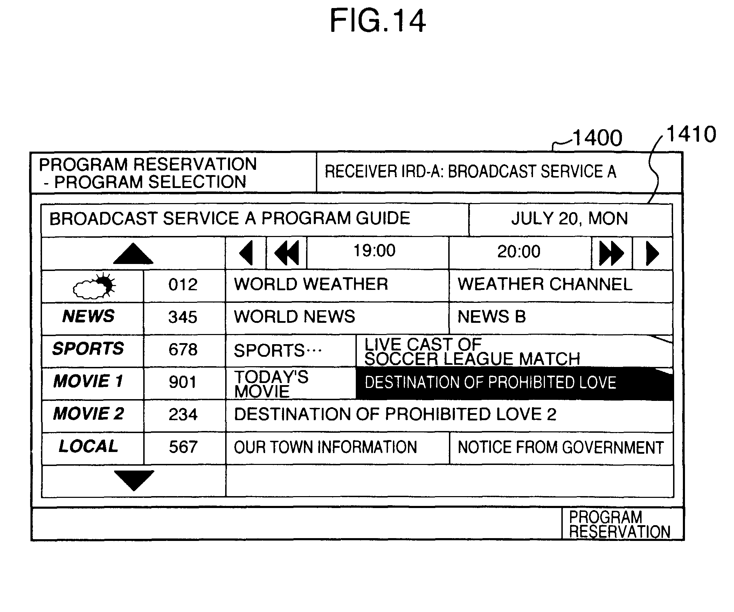

1200. An example of the EPG screen in such a case will be explained below with reference to Fig. 14.

An example of the EPG screen according to this method is shown by 1400 in Fig. 14. As shown, the contents displayed are substantially the same as those on the EPG screen shown in Fig. 6, with the exception that the area indicated by 1410 is the EPG screen area generated from the EPG screen component information 1200 and the surrounding area thereof is the area overlapped in the VTR 130. By doing so, the display becomes possible in accordance with the intended function of the VTR 130 such as the immediate program recording, the program recording reservation or the simple program selection.

After the processing of generating the EPG screen 1400 in step 1301, the EPG screen 1400 is displayed on the TV 150 (step 1302). This operation is performed in such a manner that as in Fig. 3A, the video data output for display on the TV 150, for example, is output by multiplexing the EPG screen 1400.

In this way, the EPG screen generating equipment (VTR 130) can generate the EPG screen (EPG screen 1400) without interpreting the program information (i.e. regardless of the difference in broadcast services). In this case, the information acquired by the broadcast receiver (IRD-A110) is the EPG screen component information (the EPG screen component information 1200).

A method of acquiring from the broadcast receiver the video/audio signal for the program selected on the EPG screen 1400 thus displayed will be explained below with reference to Fig. 13B. Each program displayed in the EPG screen 1400 is assumed to be a button element, and it is also assumed that the information (the stream ID information in the first and second methods) for identifying the video/audio signal of a corresponding program can be acquired from the IRD-A110 using the element ID of the button element.

First, as in step 311 shown in Fig. 3A, the desired program (the button element indicating the program) is selected by the user from the EPG screen (the EPG screen 1400 in this case) on display (step 311). In the process, the display of the button element is updated with reference to the background color information and the background pattern information in the element list 1230 as required. Also, in the case where the button element having a right-directed triangle pattern is selected in the EPG screen 1400, for example, the IRD-A110 is notified to acquire the information required of the EPG screen component information 1200 again. Then, the processing of steps 1301 and 1302 are executed to redisplay the EPG screen 1400.

Then, the element ID corresponding to the button element selected in step 311 is notified to the IRD-A110 (step 1321).

The IRD-A110 with the program element ID notified in step 1321 transmits the information for identifying the video/audio signal of the program corresponding to the particular element ID (program) to the VTR 130, which in turn acquires it (step 1322).

Using the ID information acquired in step 1322, the IRD-A110 is requested to acquire the video/audio signal of the particular program, and according to the application involved, the same signal is reproduced/recorded or processed for reservation thereof (step 1323).

With the method explained, not only the EPG screen is generated and displayed, but also the desired program can be selected from the EPG screen and can be viewed, recorded or reserved. Although the information for identifying the video/audio signal of the program is acquired from the IRD-A110 using the selected element ID, the ID information may alternatively be stored as information by type or the setting information in the element list 1230 in advance. In that case, the VTR 130 can acquire the ID information by reference to the particular information.

In the third method, the EPG screen component information 1200 can be used as having another data configuration. For example, the data format such as the well-known HTML (hypertext markup language) may be used. Of course, in that case, the EPG screen component information interpretation software 1131 in Fig. 11 is replaced by the means for interpreting the data of HTML format.

On the other hand, the EPG screen data of a format generated by the EPG screen generating unit 1132 may be acquired directly from the IRD-A110 in place of the EPG screen component information 1200. In such a case, the EPG screen component information interpretation software 1131 shown in Fig. 11 is not required, but the EPG screen data is required to be generated by the IRD-A110. Further, in this case, the VTR 130 cannot know the contents of the EPG screen (the EPG screen 1410, for example) on display, and therefore, the input operation (operation for program selection) by the user is directly (by depression of the upper, lower, right or left button of the remote controller, for example) notified to the IRD-A110. The IRD-A110 notified of the input operation, if required to replot the EPG screen in accordance with the input operation, generates a new EPG screen data and sends it to the VTR 130. In the case where the input operation is for program selection, on the other hand, the fact that a program has been selected in response to the input operation is notified to the VTR 130. As described above, the format of the EPG screen data is that generated by the EPG screen generating unit 1132 in the VTR 130. This format is well known as a format of the video signal input from the a VTR or the like by the TV 150, and will not be shown.

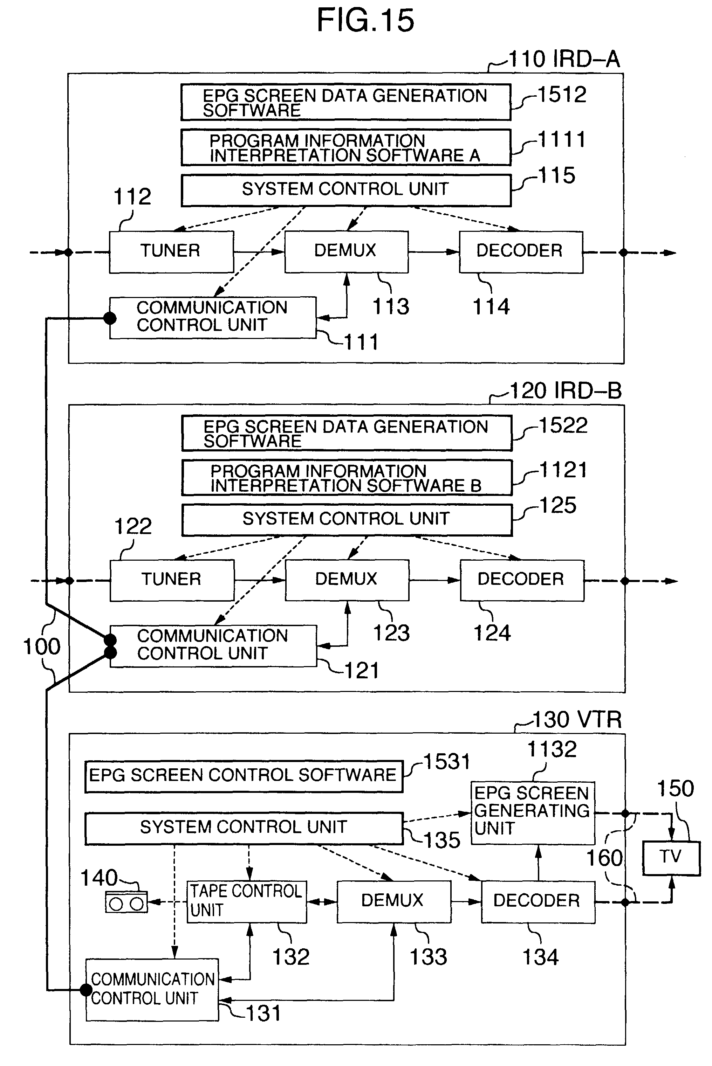

An example configuration of the IRD-A110, IRD-B120 and VTR 130 for using this method will be explained with reference to Fig. 15. The configuration of the network is the same as in the previously explained case.

First, the difference of the component elements of the IRD-A110 from the component elements shown in Fig. 11 is that the EPG screen component information generating software 1112 for generating the EPG screen component information 1200 is replaced by the EPG screen data generating software 1512 for generating the EPG screen data.

In similar fashion, the difference of the component elements of the IRD-B120 from those shown in Fig. 11 is that the EPG screen component information generating software 1122 for generating the EPG screen component information 1200 is replaced by the EPG screen data generating software 1522 for generating the EPG screen data.

On the other hand, the difference of the component elements of the VTR 130 from those shown in Fig. 11 is that the EPG screen component information interpretation software 1131 is not included, but is replaced with the EPG screen control software 1531 taking charge of the EPG screen control according to the input operation of the user on the EPG screen through a remote controller or the like input means.

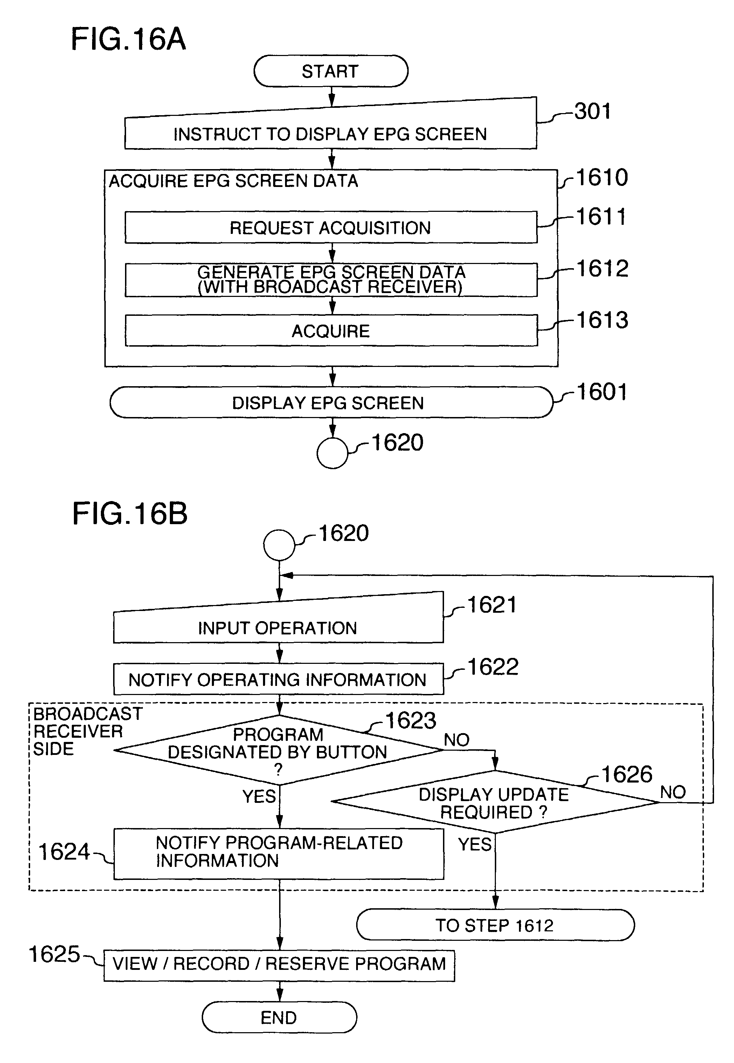

Now, the process for generating the EPG screen according to the method using the EPG screen data described above will be explained below with reference to the processing flow of Fig. 16A. As in Fig. 3A (step 301), assume that an instruction is given through the input select screen 400 to display the EPG screen for the program received by the IRD-A110, i.e. the program of the broadcast service A.

First, as in step 301 shown in Fig. 3A, the user gives an instruction for display of the EPG screen to the VTR 130 thereby to start the process (step 301).

Then, the EPG screen data are acquired from the IRD-A110 (step 1610). This step 1610 is processed in three stages as described below.

First, the VTR 130 requests the IRD-A110 to acquire the EPG screen data (step 1611). This request processing, like step 303 of Fig. 3A, is executed by the communication of a control signal using the IEEE1394 serial bus 100. In the process, the IRD-A110 transmits the information required for generating the EPG screen component information 1200. The information thus transmitted includes, for example, the time information (YY hours from time XX) of the EPG screen required to be generated and the genre information. Also, the information (the displayable size and the displayable color) for the display function of the screen generated by the EPG screen generating unit 1132 in the VTR 130 is transmitted also at the same time.

The IRD-A110 that has received the EPG screen data acquisition request from the VTR 130 generates the EPG screen data based on the program information 200 supplied by broadcast or the like (step 1612). In this process, the information transmitted from the VTR 130 in step 1612 is referred to and the EPG data is generated in accordance with the particular information. This step is processed by the program information interpretation software A1111 and the EPG screen component information generating unit 1112 in the IRD-A110.

The IRD-A110 transmits the EPG screen data generated in step 1612 to the VTR (step 1613). The communication method for this is by a control signal using the IEEE1394 serial bus 100, i.e. the response to the acquisition request from the VTR 130 in step 1611.

In this step, the EPG screen data acquired in step 1610 is output to the TV 150 as the EPG screen 1410 (step 1601). At the same time, the EPG screen unique to the VTR 130 may be overlapped with the EPG screen data acquired from the IRD-A110 as required. In such a case, an example of the EPG screen may be similar to the EPG screen 1400 shown in Fig. 14.

A method of acquiring the video/audio signal for the program selected on the EPG screen 1410 on display from the broadcast receiver will be explained with reference to Fig. 16B. The user is assumed to perform the operation on the EPG screen 1410 using the input means such as a remote controller for the VTR 130. This input means is assumed to have direction buttons indicating the four directions of up, down, right and left (used when moving the selected element on the EPG screen 1410) and a determination button for giving an instruction to determine a select element on the EPG screen. The select element is defined as a button element representing the program indicated in the EPG screen 1410 and a display element for receiving the input instruction from a button or the like to change the display time zone of the EPG screen 1410.

First, the operating instruction to the EPG screen 1200 from the user through the input means is received (step 1621).

Then, the operating information in step 1621 is notified to the IRD-A110 (step 1622). This information is for identifying the four-direction buttons and the determination button of the input means not shown.

The IRD-A110 that has received the operating information in step 1622 determines whether the particular operating information is for the selection of the button element indicating the program (step 1623). In the case where it is the selection of the button element indicating the program, the process proceeds to step 1624. In the case where the operating information is not that of selection of the button element indicating the program, on the other hand, the process proceeds to step 1626.

In the case where it is determined in step 1623 that the user operation is a program designation (in the case where it is determined that the button element indicating the program has been selected), the information for identifying the video/audio signal of the particular program is notified to the VTR 130 (step 1624).

Using the ID information acquired by the notification in step 1624, the IRD-A110 is requested to acquire the video/audio signal for the same program, thereby reproducing/recording the signal or executing the processing for reservation thereof in accordance with the application involved (step 1625).

In the case where it is determined in step 1623 that the user operation is not a program designation, on the other hand, it is determined whether the display update of the EPG screen 1410 is required or not according to the designation (step 1626). In the case where it is determined that the display update is required, the process returns to step 1612 in Fig. 16A, and the EPG screen data is generated for updating the display. In the case where it is determined that the display update is not required, on the other hand, the process returns to step 1621 for receiving the user designation of operation on the EPG screen 1200 again.

With the method described above, like the method using the EPG screen component information 1200 described above, the generation and display of the EPG screen, the program selection and the viewing, recording and/or reservation of the program become possible.

The foregoing is the description of the process for generating the EPG screen according to the third method.

As described above, according to this invention, even in the presence of the program information of a plurality of different formats (the program information 200), the EPG screen generating equipment (VTR 130) connected to the broadcast receivers (IRD-A110 and IRD-B120) through the communication means can generate the EPG screen according the three methods described above.

First, in the first method, the program information is acquired in its direct form from the program receiver, and the EPG screen can be generated by interpreting the program information by the means included in the EPG generating unit for interpreting the program information of each format or by the interpretation means acquired from the program receiver.

In the second method, on the other hand, the EPG generating unit acquires the program information of a common format that is produced by the converting operation of the program receiver and that can be interpreted by the EPG generating unit. Thus, the EPG screen can be generated by interpreting the program information of a common format.

Further, in the third method, the EPG generating unit acquires the EPG screen component information or the EPG screen data generated by the program receiver based on the program information, so that the EPG screen can be generated/displayed based on the same information.

In the foregoing description of this embodiment, the digital satellite broadcast receivers (IRD-A110, IRD-B120) are described as an example of the broadcast receiver. These receivers, however, can be replaced with other types of devices handling the program information. For example, it may be a VTR which is used as an example of the EPG screen generating equipment in the foregoing description. The VTR records the program information together with the video/audio signal in the magnetic tape, and it may be desired to generate the EPG screen by other EPG screen generating equipment from the program information thus recorded, for example.

In similar manner, the VTR (VTR 130) cited above as an example of the EPG screen generating equipment may be replaced with other types of device. For example, the digital TV for reproducing the coded video/audio signal is a candidate. This may apply to the case where the program received from the IRD-A110 or the like is selected on the EPG screen generated by the digital TV.

According to the above-mentioned embodiments, even in the presence of the program information of a plurality of different formats due to the difference in the broadcast services, the equipment (EPG generating equipment) connected to the program receiver through the communication means can exhibit the following functions to generate the EPG screen.

As a first method, the program information is received in its direct format from the program receiver, and the particular program information is interpreted by the interpretation means included in the EPG generating unit or the interpretation means acquired from the program receiver for interpreting the program information of various formats thereby to generate the EPG screen.

As a second method, the EPG generating unit acquires the program information that is converted into a common format by the program receiver and that can be interpreted by the EPG generating unit. This program information of common format is interpreted by the EPG generating unit thereby to generate an EPG screen.

As a third method, the EPG generating unit acquires the EPG screen component information or the EPG screen data generated by the program receiver based on the program information, and thus can generate/display the EPG screen based on the particular information.

## Claims

1. An electric program guide (EPG) screen generating apparatus for acquiring, from other equipment (110, 120) through communication means, the information required for generating an EPG screen for the user to select a program and generating the EPG screen,
wherein the information required for generating the EPG screen is defined as program information having one or a plurality of different formats generated and/or acquired by said other equipment from a broadcast signal or a storage medium, said apparatus comprising:
means (137) for identifying the format of the program information acquired from said other equipment and specifying the format of said program information;
means (138, 139) for interpreting said program information having one or a plurality of formats;
means (136) for interpreting said program information by said program information interpretation means and generating an EPG screen in accordance with the format of said program information specified by said program information identification means; and
means (160) for displaying said EPG screen generated by said EPG screen generating means on a display unit (150) of said apparatus or an external display unit.

2. An EPG screen generating apparatus for acquiring, from other equipment (110, 120) through communication means, the information required for generating an EPG screen for the user to select a program,
wherein the information required for generating the EPG screen is defined as program information having one or a plurality of different formats generated and/or acquired by said other equipment from a broadcast signal or a storage medium, said apparatus comprising:
means (802) for acquiring, from said other equipment through said communication means, the program information interpretation means for interpreting said program information;
means for interpreting said program information by the program information interpretation means acquired by said acquisition means and generating the EPG screen; and
means (160) for displaying said EPG screen generated by said EPG screen generating means, on a display unit (150) of said apparatus or an external display unit.

3. An EPG screen generating apparatus for acquiring, from other equipment (110, 120) through communication means, the information required for generating the EPG screen for the user to select a program,
wherein the information required for generating the EPG screen is defined as program information having one or a plurality of different formats generated and/or acquired by said other equipment from a broadcast signal or a storage medium, said apparatus comprising:
means (137) for identifying the format of the program information acquired from said other equipment and specifying the format of said program information;
means (802) for acquiring, from said other equipment through said communication means, the program information interpretation means for interpreting said program information specified by said program information identification means;
means for interpreting said program information by the program information interpretation means acquired by said acquisition means and generating the EPG screen; and
means (160) for displaying said EPG screen generated by said EPG screen generating means on a display unit (150) of said apparatus or an external display unit.

4. An EPG screen generating apparatus for acquiring, from other equipment (110, 120) through communication means, the information required for generating the EPG screen for the user to select a program,
wherein the information required for generating the EPG screen is defined as program information (200) having one or a plurality of different formats generated and/or acquired by said other equipment from a broadcast signal or a storage medium, said apparatus comprising:
means (137) for identifying the format of the program information acquired from said other equipment and specifying the format of said program information;
means (802) for acquiring, from second other equipment through said communication means or through a storage medium, the program information interpretation means for interpreting said program information having a format specified by said program information identification means;
means for interpreting said program information by the program information interpretation means acquired by said acquisition means and generating the EPG screen; and
means (160) for displaying said EPG screen generated by said EPG screen generating means on a display unit (150) of said apparatus or an external display unit.

5. An EPG screen generating apparatus according to Claims 1 to 4,
wherein said program information includes a signal ID for identifying the video/audio signal contained in a specific program, said apparatus further comprising:
program select means for the user to select a specific program from said EPG screen displayed on said display means;
means for acquiring said signal ID corresponding to the program selected by said program select means; and
signal acquisition means for acquiring from said other equipment the video/audio signal corresponding to said signal ID acquired by said signal ID acquisition means.

6. An EPG screen generating apparatus according to Claims 2 to 4,
wherein in the presence of said second program information interpretation means, said acquisition means is configured not to acquire said program information interpretation means; and
wherein said EPG screen generating means is configured to interpret said program information by said existing second program information interpretation means thereby to generate an EPG screen.

7. An EPG screen generating apparatus according to Claims 2 to 4, further comprising:
said second program information interpretation means:
means for comparing said program information interpretation means acquired by said acquisition means with said existing second program information interpretation means; and
means for replacing said second program information interpretation means of said EPG screen generating apparatus with said program information interpretation means acquired by said acquisition means, in accordance with the result of comparison in said comparator means;
wherein said EPG screen generating means is configured to generate an EPG screen by interpreting said program information by said program information interpretation means replaced by said replacing means.

8. An EPG screen generating apparatus for acquiring from other equipment (110, 120) through communication means, the information required for generating an EPG screen for the user to select a program and generating an EPG screen,
wherein the information required for generating the EPG screen is defined as common program information acquired by said other equipment from a broadcast signal or a storage medium, generated from program information having one or a plurality of different formats and interpreted by said EPG screen generating apparatus, said apparatus comprising:
means (910, 920) for interpreting said common program information;
means for interpreting said common program information by said common program information interpretation means and generating the EPG screen; and
means (160) for displaying said EPG screen generated by said EPG screen generating means, on a display unit (150) of said apparatus or an external display unit.

9. An EPG screen generating apparatus according to Claim 8,
wherein said common program information includes the program name and the broadcast time information at least for each program, said apparatus comprising:
means for interpreting said common program information;
means for interpreting said common program information by said common program information interpretation means and generating the EPG screen; and
means (160) for displaying said EPG screen generated by said EPG screen generating means on a display unit (150) of said apparatus or an external display unit.

10. An EPG screen generating apparatus according to Claim 8,
wherein said common program information includes a signal ID for identifying the video/audio signal included in a specific program, said apparatus further comprising:
means for enabling the user to select a specific program from said EPG screen displayed on said display means;
means for acquiring said signal ID corresponding to the program selected by said program select means; and
means for acquiring, from said other equipment through said communication means, the video/audio signal corresponding to said signal ID acquired by said signal ID acquisition means.

11. An EPG screen generating apparatus according to Claim 8,
wherein said common program information is the information generated by being divided for each predetermined time and/or by the type of the program.

12. An EPG screen generating apparatus for acquiring, from other equipment (110, 120) through communication means, the information required for generating an EPG screen for the user to select a program, and generating an EPG screen,
wherein the information required for generating the EPG screen is defined as the EPG screen component information including the element information representing a figure or a text for at least one component element constituting the EPG screen, and/or the position information representing the position of said component element on said EPG screen, and/or the processing information indicating the processing for the operation of said component element, said EPG screen component information being generated from the program information having one or a plurality of different formats, said apparatus comprising:
means (1131) for interpreting said EPG screen component information;
means for interpreting said EPG screen component information by said EPG screen component information interpretation means and generating the EPG screen; and
means (160) for displaying said EPG screen generated by said EPG screen generating means on a display unit (150) of said apparatus or an external display unit.

13. An EPG screen generating apparatus according to Claim 12,
wherein said EPG screen component information further includes an element ID corresponding to said component element, said apparatus further comprising:
means for enabling the user to select a specific program from said EPG screen displayed on said display means;
means for acquiring said element ID corresponding to the program selected by said program select means;
means for transmitting said element ID acquired by said element ID acquisition means to said other equipment through said communication means;
means for acquiring, from said other equipment through said communication means, the signal ID for identifying the video/audio signal included in the program corresponding to said element ID transmitted by said element ID transmission means; and
means for acquiring, from said other equipment through said communication means, the video/audio signal corresponding to said signal ID acquired by said signal ID acquisition means.

14. An EPG screen generating apparatus according to Claim 12,
wherein said EPG screen component information further includes a signal ID for identifying the video/audio signal included in a specific program, said apparatus further comprising:
means for enabling the user to select a specific program from said EPG screen displayed on said display means;
means for acquiring said signal ID corresponding to the program selected by said program select means; and
means for acquiring, from said other equipment through said communication means, the video/audio signal corresponding to said signal ID acquired by said signal ID acquisition means.

15. An EPG screen generating apparatus according to Claim 12, further comprising:
means for generating an auxiliary screen based on the information not included in said EPG screen component information;
wherein said display means is configured to display said EPG screen generated by said EPG screen generating means in overlapped relation with said auxiliary screen generated by said auxiliary screen generating means.

16. An EPG information transmission apparatus for transmitting, to other equipment through communication means, the information required for generating an EPG screen for the user to select a program,
wherein said information required for generating said EPG screen is the program information having one or a plurality of different formats, said apparatus further comprising:
means for generating and/or acquiring said program information from a broadcast signal or a storage medium; and
means for transmitting, to said other equipment through said communication means, said program information acquired by said program information acquisition means.

17. An EPG information transmission apparatus according to Claim 16, further comprising:
means for interpreting said program information; and
means for transmitting said program information interpretation means to said other equipment through said communication means.

18. An EPG information transmission apparatus according to Claim 16,
wherein said program information further includes a signal ID for identifying the video/audio signal included in a specific program, said apparatus further comprising:
means for acquiring said signal ID from said other equipment; and
means for acquiring, from a broadcast signal or a storage medium, the video/audio signal corresponding to said signal ID acquired by said signal ID acquisition means; and
means for transmitting, to said other equipment through said communication means, said video/audio signal acquired by said video/audio signal acquisition means.

19. An EPG information transmission apparatus for transmitting, to other equipment through communication means, the information required for generating an EPG screen for the user to select a program,
wherein said information required for generating said EPG screen is the program information having one or a plurality of different formats, said apparatus further comprising:
means for interpreting said program information; and
means for transmitting said program information interpretation means to said other equipment through said communication means.

20. An EPG information transmission apparatus for transmitting, to other equipment through communication means, the information required for generating an EPG screen for the user to select a program,
wherein said information required for generating said EPG screen is the program information having one or a plurality of different formats, said apparatus further comprising:
means for generating and/or acquiring said program information from a broadcast signal or a storage medium;
means for converting said program information acquired by said program information acquisition means into the common program information interpreted by said other equipment; and
means for transmitting said common program information converted by said common program information generating means to said other equipment through said communication means.

21. An EPG information transmission apparatus according to Claim 20,
wherein said common program information includes the information of the program name and the broadcast time at least for each program, said apparatus further comprising;
means for transmitting said common program information converted by said common program information generating means to said other equipment through said communication means.

22. An EPG information transmission apparatus according to Claim 20,
wherein said common program information further includes a signal ID for identifying the video/audio signal included in a specific program, said apparatus further comprising:
means for acquiring said signal ID from said other equipment; and
means for acquiring, from a broadcast signal or a storage medium, the video/audio signal corresponding to said signal ID acquired by said signal ID acquisition means; and
means for transmitting, to said other equipment through said communication means, said video/audio signal acquired by said video/audio signal acquisition means.

23. An EPG information transmission apparatus according to Claim 20,
wherein said common program information is the information converted by being divided for each predetermined time or by the type of the program.

24. An EPG information transmission apparatus for transmitting, to other equipment through communication means, the information required for generating an EPG screen for the user to select a program,
wherein said information required for generating the EPG screen is defined as the EPG screen component information including the element information generated from the program information having one or a plurality of different formats and representing a figure or a text for one or more component elements of the EPG screen, and/or the position information representing the position of said component element on said EPG screen, and/or the processing information representing the processing for the operation of said component element, said apparatus comprising:
means for generating and/or acquiring said program information from a broadcast signal or a storage medium;
means for generating said EPG screen component information from said program information acquired by said program information acquisition means; and
means for transmitting, to said other equipment through said communication means, said EPG screen component information generated by said EPG screen component information generating means.

25. An EPG information transmission apparatus according to Claim 24,
wherein said EPG screen component information further includes an element ID corresponding to said component element, said apparatus further comprising:
means for acquiring said element ID from said other equipment;
means for acquiring an signal ID for identifying the video/audio signal included in the program corresponding to said element ID acquired by said element ID acquisition means;
means for transmitting, to said other equipment through said communication means, said signal ID acquired by said signal ID acquisition means;
means for acquiring said signal ID from said other equipment;
means for acquiring, from a broadcast signal or a storage medium, the video/audio signal corresponding to said signal ID acquired by said signal ID acquisition means; and
means for transmitting, to said other equipment through said communication means, said video/audio signal acquired by said video/audio signal acquisition means.

26. An EPG information transmission apparatus according to Claim 24,
wherein said EPG screen component information further includes a signal ID for identifying the video/audio signal included in a specific program, said apparatus further comprising:
means for acquiring said signal ID from said other equipment; and
means for acquiring, from a broadcast signal or a storage medium, the video/audio signal corresponding to said signal ID acquired by said signal ID acquisition means; and
means for transmitting, to said other equipment through said communication means, said video/audio signal acquired by said video/audio signal acquisition means.

27. An EPG screen generating method for an EPG screen generating apparatus for generating an EPG screen for the user to select a program, comprising the steps of:
acquiring the information required for generating said EPG screen from other equipment through communication means;
identifying the format of said program information acquired and specifying said program information as one format;
generating an EPG screen by interpreting said program information in accordance with said specified format of said program information; and
displaying said generated EPG screen on a display unit included in or external to said EPG screen generating apparatus;
wherein said information required for generating said EPG screen is the program information broadcast by said other equipment or acquired from a storage medium and/or generated, and said program information having one or a plurality of different formats.

28. An EPG screen generating method for an EPG screen generating apparatus for generating an EPG screen for the user to select a program, comprising the steps of:
acquiring the information required for generating said EPG screen from other equipment through communication means;
acquiring the program information interpretation means for interpreting said program information from said other equipment through said communication means;
generating an EPG screen by interpreting said acquired program information by said acquired program information interpretation means; and
displaying said generated EPG screen on a display unit included in or external to said EPG screen generating apparatus;
wherein said information required for generating said EPG screen is the program information broadcast by said other equipment or acquired from a storage medium and/or generated, and said program information having one or a plurality of different formats.

29. An EPG screen generating method for an EPG screen generating apparatus for generating an EPG screen for the user to select a program, comprising the steps of:
acquiring the information required for generating said EPG screen from other equipment through communication means;
identifying the format of said acquired program information and specifying said program information as one format;
acquiring, from said other equipment through said communication means, the program information interpretation means for interpreting said program information of said specified format;
generating an EPG screen by interpreting said acquired program information by said acquired program information interpretation means; and
displaying said generated EPG screen on a display unit included in or external to said EPG screen generating apparatus;
wherein said information required for generating said EPG screen is the program information having one or a plurality of different formats generated and/or acquired by said other equipment from a broadcast signal or a storage medium.

30. An EPG screen generating method for an EPG screen generating apparatus for generating an EPG screen for the user to select a program, comprising the steps of:
acquiring the information required for generating said EPG screen from other equipment through communication means;
identifying the format of said acquired program information and specifying said program information as one format;
acquiring, from second other equipment through said communication means or through a storage medium, the program information interpretation means for interpreting said program information of said specified format;
generating an EPG screen by interpreting said acquired program information by said acquired program information interpretation means; and
displaying said generated EPG screen on a display unit included in or external to said EPG screen generating apparatus;
wherein said information required for generating said EPG screen is the program information having one or a plurality of different formats generated and/or acquired by said other equipment from a broadcast signal or a storage medium.

31. An EPG screen generating method according to Claims 27 to 30,
wherein said program information includes a signal ID for identifying the video/audio signal included in a specific program, said method further comprising the steps of:
causing the user to select a specific program from said EPG screen on display;
acquiring the signal ID corresponding to said selected program; and
acquiring the video/audio signal corresponding to said signal acquired ID from said other equipment through said communication means.

32. An EPG screen generating method according to Claims 28 to 30, comprising the step of generating an EPG screen by interpreting, in the presence of second program information interpretation means, said program information by said second program information interpretation means without acquiring said program information interpretation means.

33. An EPG screen generating method according to Claims 28 to 30, comprising the steps of:
comparing said acquired program information interpretation means with said second program information interpretation means in the presence of said second program information interpretation means;
replacing said second program information interpretation means of said EPG screen generating apparatus with said acquired program information interpretation means in accordance with the result of said comparison; and
generating an EPG screen by interpreting said program information by said replaced program information interpretation means.

34. An EPG screen generating method for an EPG screen generating apparatus for generating an EPG screen for the user to select a program, comprising the steps of:
acquiring the information required for generating said EPG screen from other equipment through communication means;
generating an EPG screen by interpreting common program information; and
displaying said generated EPG screen on a display unit included in or external to said EPG screen generating apparatus;
wherein said information required for generating said EPG screen is the common program information generated from the program information having one or a plurality of different formats acquired by said other equipment from a broadcast signal or a storage medium and interpreted by said EPG screen generating apparatus.

35. An EPG screen generating method according to Claim 34,
wherein said common program information includes the program name and the broadcast time information at least for each program, said method further comprising the steps of:
generating an EPG screen by interpreting said common program information; and
displaying said generated EPG screen on a display unit included in or external to said EPG screen generating apparatus.

36. An EPG screen generating method according to Claim 34,
wherein said common program information includes a signal ID for identifying the video/audio signal included in a specific program, said method further comprising the steps of:
causing the user to select a specific program from said EPG screen on display;
acquiring the signal ID corresponding to said selected program; and
acquiring the video/audio signal corresponding to said acquired signal ID from said other equipment through said communication means.

37. An EPG screen generating method according to Claim 34,
wherein said common program information is the information generated by being divided for each predetermined time and/or by program type.

38. An EPG screen generating method for an EPG screen generating apparatus for generating an EPG screen for the user to select a program, comprising the steps of:
acquiring the information required for generating said EPG screen from other equipment through communication means;
generating an EPG screen by interpreting EPG screen component information; and
displaying said generated EPG screen on a display unit included in or external to said EPG screen generating apparatus;
wherein said information required for generating the EPG screen is defined as the EPG screen component information including the element information representing a figure or a text for one or more component elements of the EPG screen generated from the program information having one or a plurality of different formats, and/or the position information representing the position of said component element on said EPG screen, and/or the processing information representing the processing on the operation of said component elements.

39. An EPG screen generating method according to Claim 38,
wherein said EPG screen component information further includes the element ID corresponding to said component element, said method further comprising the steps of:
causing the user to select a specific program from said EPG screen on display;
acquiring said element ID corresponding to said selected program;
transmitting said acquired element ID to said other equipment through said communication means;
acquiring, from said other equipment through said communication means, the signal ID for identifying the video/audio signal included in the program corresponding to said transmitted element ID; and
acquiring the video/audio signal corresponding to said acquired signal ID from said other equipment through said communication means.

40. An EPG screen generating method according to Claim 38,
wherein said EPG screen component information further includes a signal ID for identifying the video/audio signal included in a specific program, said method further comprising the steps of:
causing the user to select a specific program from said EPG screen on display;
acquiring said signal ID corresponding to said selected program; and
acquiring the video/audio signal corresponding to said acquired signal ID from said other equipment through said communication means.

41. An EPG screen generating method according to Claim 38, further comprising the steps of:
generating an auxiliary screen based on the information not included in said EPG screen component information; and
displaying said generated EPG screen in overlapped relation with said generated auxiliary screen.

42. An EPG screen generating apparatus for acquiring, from other equipment (110, 120) through communication means, the information required for generating an EPG screen for the user to select a program, and generating an EPG screen, wherein the information required for generating the EPG screen is defined as the EPG screen plotting data generated from the program information having one or a plurality of different formats acquired by said other equipment from a broadcast signal or a storage medium; and
said apparatus further comprising means for displaying said EPG screen expressed by said EPG screen plotting data on a display unit included in or external to said apparatus.

43. An EPG screen generating apparatus according to Claim 42, further comprising:
EPG screen operating means for receiving the selective operation of the user on said EPG screen displayed on said display means;
means for notifying said other equipment, through said communication means, of the information on the selective operation of the user by said EPG screen operating means;
means for acquiring, from said other equipment through said communication means, the signal ID for identifying the video/audio signal included in said program, in the case where the selective operation of the user by said EPG screen operating means is the program selection; and
means for acquiring, from said other equipment through said communication means, the video/audio signal corresponding to said signal ID acquired by said signal ID acquisition means.

44. An EPG screen generating apparatus according to Claim 42, comprising:
means for generating an auxiliary screen based on the information not included in said EPG screen plotting data;
wherein said display means is configured to display said auxiliary screen generated by said auxiliary screen generating means in overlapped relation with said EPG screen expressed by said EPG screen plotting data.

45. An EPG information transmission apparatus for transmitting, to other equipment through communication means, the information required for generating the EPG screen for the user to select a program;
wherein said information required for generating said EPG screen is the EPG screen plotting data generated from the program information having one or a plurality of different formats acquired by said other equipment from a broadcast signal or a storage medium, said apparatus further comprising:
means for acquiring said program information from a broadcast signal or a storage medium and/or generating said program information;
means for generating said EPG screen plotting data from said program information acquired by said program information acquisition means; and
means for transmitting, to said other equipment through said communication means, said EPG screen plotting data generated by said EPG screen plotting data generating means.

46. An EPG information transmission apparatus according to Claim 45, further comprising:
means for acquiring from said other equipment the information on the selective operation of the user on the EPG screen corresponding to said EPG screen plotting data;
means for updating the EPG screen plotting data, when the replotting of said EPG screen is required, in accordance with the selective operation of the user by said EPG screen operating means; and
means for transmitting, to said other equipment through said communication means, said EPG screen plotting data updated by said EPG screen plotting data update means.

47. An EPG information transmission apparatus according to Claim 45, further comprising:
means for acquiring from said other equipment the information on the selective operation of the user on the EPG screen corresponding to said EPG screen plotting data;
means for acquiring a signal ID for identifying the video/audio signal included in a program in the case where the selective operation of the user by said EPG screen operating means is the selection of said program;
means for transmitting, to said other equipment through said communication means, said signal ID acquired by said signal ID acquisition means;
means for acquiring said signal ID from said other equipment;
means for acquiring, from a broadcast signal or a storage medium, the video/audio signal corresponding to said signal ID acquired by said signal ID acquisition means; and
means for transmitting the video/audio signal acquired by said video/audio signal acquisition means to said other equipment through said communication means.

48. An EPG screen generating method for an EPG screen generating apparatus for generating an EPG screen for the user to select a program, comprising the step of;
acquiring the information required for generating said EPG screen from other equipment through communication means;
wherein said information required for generating said EPG screen is the EPG screen plotting data generated from the program information having one or a plurality of different formats acquired by said other equipment from a broadcast signal or a storage medium; and
wherein said EPG screen expressed by said EPG screen plotting data is displayed on a display unit included in or external to said apparatus.

49. An EPG screen generating method according to Claim 48, further comprising the steps of:
receiving the selective operation of the user on said EPG screen displayed;
notifying the received information on the selective operation of the user to said other equipment through said communication means;
acquiring the signal ID for identifying the video/audio signal included in said program from said other equipment through said communication means in the case where the program is selected by the selective operation of the user notified; and
acquiring the video/audio signal corresponding to said acquired signal I/D from said other equipment through said communication means.

50. An EPG screen generating method according to Claim 48, further comprising the steps of:
generating an auxiliary screen based on the information not included in said EPG screen plotting data; and
displaying said EPG screen expressed by said EPG screen plotting data in overlapped relation with said auxiliary screen generated.
